# EUROPÄISCHE PATENTSCHRIFT

(11) **EP 1 887 054 B1**
(45) Veröffentlichungstag und Bekanntmachung des Hinweises auf die Patenterteilung: **21.01.2009**
(21) Anmeldenummer: 07014962.0
(22) Anmeldetag: 31.07.2007
(51) Int. Cl.: C09D 5/00, D06F 53/00, D06F 55/00, D06F 57/00

(54) **Wäscheaufhängemittel**
Device for hanging washing
Système pour pendre le linge

(30) Priorität: 08.08.2006 DE 102006037319
(43) Veröffentlichungstag der Anmeldung: 13.02.2008
(73) Patentinhaber: LEIFHEIT AG, 56377 Nassau (DE)
(72) Erfinder: Gross, Christian, 57250 Netphen (DE); Schramm, Benjamin, 65558 Eppenrod (DE)

(56) Entgegenhaltungen:
- DE-A1- 3 249 358
- DE-A1-3102005 059 15
- DE-U1- 20 315 085
- US-A- 2 979 753

## Beschreibung

Die Erfindung betrifft ein Wäscheaufhängemittel, insbesondere Wäscheleinen, Wäschestäbe, Wäschetrocknungsgestelle oder Wäscheklammern.

In sehr verbreiteter Weise werden Wäschestücke zum Trocknen auf Wäscheleinen oder Wäschestäbe mit Hilfe von Wäscheklammern aufgehängt. Oft sind die Wäscheleinen oder Wäschestäbe Bestandteil von Wäschetrocknungsgestellen, wie Standtrocknern oder Wäschespinnen. Insbesondere wenn diese Wäscheaufhängemittel im Freien stehen, verschmutzen sie sehr schnell, so dass sie vor der Benutzung mühsam und aufwendig gereinigt werden müssen, um ein erneutes Verschmutzen der aufzuhängenden, frisch gewaschenen Wäsche zu vermeiden.

Aus DE 32 49 358 A1 ist ein Lüftungs- und Trocknungsgestell mit Wäscheleineneinzug bekannt. Das Lüftungs- und Trocknungsgestell weist ein an einem Mast angeordnetes mehrarmiges Spreizgestell auf, dass eine Wäscheleine trägt. Es ist eine Vorrichtung zum Einzug der Wäscheleine in die Arme des Spreizgestells vorgesehen, dass die Wäscheleine beim Beiklappen des Spreizgestells automatisch in die Arme einzieht, so dass diese vor Verschmutzung geschützt sind. Dieses Lüftungs- und Trocknungsgestell verhindert sehr wirkungsvoll und effizient eine Verschmutzung der Wäscheleine, es ist jedoch sehr aufwendig herzustellen und teuer. Nachteiligerweise verschmutzen auch Teile des Spreizgestells und des Mastes, so dass der Benutzer beim Aufhängen der Wäsche aufpassen muss, mit diesen Bauteilen nicht in Berührung zu kommen. Außerdem müssen an der Wäscheleine befindliche Wäscheklammern zunächst entfernt werden, um ein ordnungsgemäßes Einziehen der Wäscheleine zu ermöglichen. Dies bedeutet für den Benutzer zusätzlichen Aufwand.

Auch Wäscheklammern werden zum Schutz vor Verschmutzung nach der Benutzung eingesammelt und in Wäscheklammerbeuteln geschützt aufbewahrt. Ein Wäscheständer mit einem integrierten Wäscheklammerbeutel ist beispielsweise aus DE 103 05 746 A1 bekannt.

Es ist die Aufgabe der vorliegenden Erfindung Wäscheaufhängemittel anzugeben, die weder vor der Benutzung aufwendig gereinigt werden müssen, noch nach der Benutzung in Schutzhüllen oder Schutzgehäusen untergebracht werden müssen und die trotzdem die aufzuhängenden Wäschestücke nicht beschmutzen.

Die Aufgabe wird durch ein Wäscheaufhängemittel gelöst, das dadurch gekennzeichnet ist, dass das Wäscheaufhängemittel selbstreinigend und/oder schmutzabweisend ausgebildet ist.

Erfindungsgemäß wurde erkannt, dass alle seit Jahrzehnten bekannten Ansätze zur Vermeidung der Verschmutzung der aufzuhängenden Wäschestücke durch das Aufhängemittel selbst einseitig darauf abzielen, dass Wäscheaufhängemittel in den Zeiten, in denen es nicht gebraucht wird, in Schutzhüllen oder Schutzgehäusen unterzubringen, die mit der aufzuhängenden Wäsche nicht in Kontakt treten. Diesen Ansatz entgegenlaufend ist das erfindungsgemäße Wäscheaufhängemittel selbstreinigend und/oder schmutzabweisend ausgebildet, so dass auf aufwendige Schutzkonstruktionen und auf ein aufwendiges Wegräumen verzichtet werden kann.

In einer vorteilhaften Ausführungsform weist das Wäscheaufhängemittel eine mikroraue Oberflächenstruktur auf. Es kann - insbesondere zusätzlich - auch vorgesehen sein, dass das erfindungsgemäße Wäscheaufhängemittel eine hydrophobe Oberfläche aufweist.

In einer besonders vorteilhaften Ausführungsform wird durch eine Kombination aus mikrorauer Oberflächenstruktur und Hydrophobie erreicht, dass bereits geringe Mengen von fließendem Wasser (beispielsweise Regen), die auf der Oberfläche haftenden Schmutzpartikel mitschwämmen und die Oberfläche reinigen.

In einer besonderen Ausgestaltungsform ist vorgesehen, dass das Wäscheaufhängemittel eine Oberfläche aufweist, die analog zum Lotuseffekt selbstreinigend ist.

Zur Erzielung einer mikrorauen Oberflächenstruktur kann die Oberfläche des Wäscheaufhängemittels mit hydrophoben Partikeln - beispielsweise mit Nanopartikeln - versehen sein.

In einer besonderen Ausführungsform ist das Wäscheaufhängemittel mit einer Lackbeschichtung mit einer partikelaufweisenden Deckschicht versehen, wobei die Partikel einen Teilchendurchmesser von weniger als 200 nm - vorzugsweise weniger als 100 nm - aufweisen, und wobei die Deckschicht vorzugsweise zusätzlich zumindest teilweise hydrophob ausgebildet ist. In einer besonderen Ausführungsform weisen die strukturbildenden Partikel einen mittleren Durchmesser von weniger als 50 nm auf. Bei den strukturbildenden Partikeln kann es sich beispielsweise um Metalloxide, Mischoxide, Silikate, Sulfate, Phosphate, Borate, Ruße, Metallpulver, Metallsufide, Metallselenide, Metallsulfoselenide oder organische Polymere oder Pigmente handeln.

In einer vorteilhaften Ausführungsform weist das erfindungsgemäße Wäscheaufhängemittel eine Beschichtung auf, die vorzugsweise hydrophob und/oder mikrorau ausgebildet ist.

In einer ganz besonders vorteilhaften Ausführungsform weist das erfindungsgemäße Wäscheaufhängemittel eine selbstreinigende Faser, insbesondere eine selbstreinigende Polymerfaser, auf. Die Verwendung von selbstreinigenden Fasern, ist insbesondere zur Herstellung von Wäscheleinen geeignet. Beispielsweise können Polymerfasern verwendet werden, die in der Oberfläche Partikel aufweisen. Diese Partikel können beispielsweise während eines Spinnprozesses durch einen Gasstrom eingebracht werden. Vorzugsweise weisen die Partikel einen Partikeldurchmesser von 20 nm bis 100 Mikrometer auf. In einer vorteilhaften Ausführungsform weist das Wäscheaufhängemittel Fasern aus thermoplastischen Kunststoffen oder aus thermoinstabilen Polymeren auf. Vorzugsweise werden polymere Materialien verwendet, die dem Spinnen aus der Schmelze oder dem Trockenspinnen zugänglich sind. In einer vorteilhaften Ausführungsform werden die Partikel während des Spinnprozesses nach Austritt der Polymeren aus der Spinndüse mittels eines Gasstromes in die Oberfläche des Polymeren eingebracht. Vorzugsweise ist die Oberfläche der Polymerfasern zur Erreichung eines lotusblütenähnlichen Selbstreinigungseffektes hydrophob und/oder mikrorau ausgebildet.

Das Wäscheaufhängemittel beinhaltet in einer vorteilhaften Ausführungsform eine Wäscheleine oder ist als Wäscheleine ausgebildet. Es kann auch vorgesehen sein, dass das Wäscheaufhängemittel einen Wäschestab beinhaltet und/oder als Wäschestab ausgebildet ist. In einer anderen Ausbildungsform beinhaltet das Wäscheaufhängemittel eine Wäscheklammer und/oder ist als Wäscheklammer ausgebildet. In einer weiteren Ausführungsform beinhaltet das Wäscheaufhängemittel ein Trockengitter und/oder ist als Trockengitter ausgebildet. In einer ganz besonders vorteilhaften Ausführungsform beinhaltet das Wäscheaufhängemittel ein Wäschetrocknungsgestell, insbesondere einen Standtrockner oder eine Wäschespinne, oder ist als Wäschetrocknungsgestell ausgebildet.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: ein als Wäschespinne ausgebildetes Aufhängemittel, und
- Fig. 2: ein erfindungsgemäßes als Wäscheklammer ausgebildetes Wäscheaufhängemittel

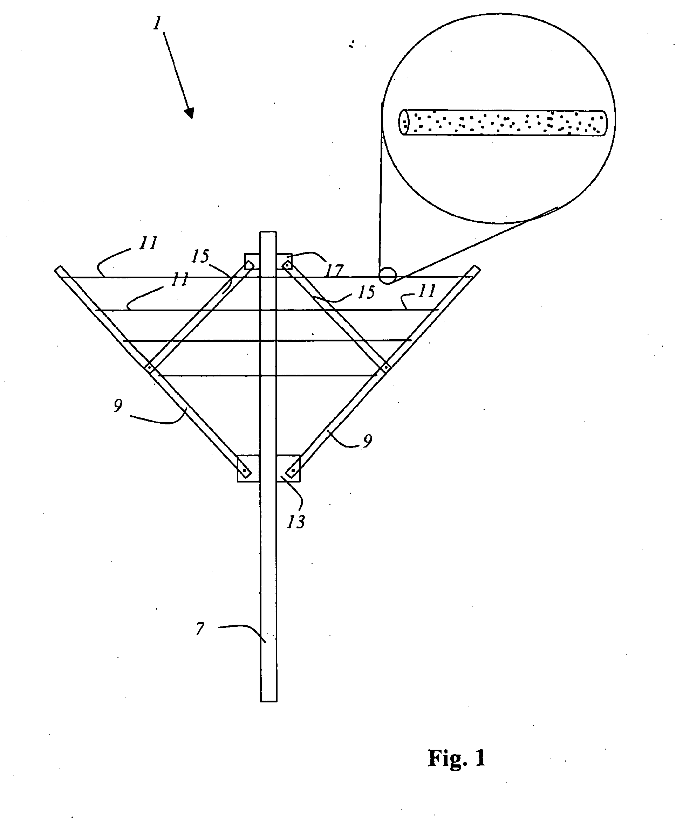

Figur 1 zeigt ein Wäscheaufhängemittel 1, dass eine mit einer Wäscheleine 2 versehene Wäschespinne 3 beinhaltet. Die Wäscheleine 2 ist von Tragarmen 4 gehalten, die an einem Mast 5 verschiebbar eingeordneten Gleitgelenk 6 angeordnet sind. Die Arme 4 sind zusätzlich durch Stützarme 7 gelenkig mit einem Haltestern 8 verbunden. Durch Herunterschieben des Gleitgelenks 6 können die Arme 4 an den Mast beigeklappt werden, durch Heraufschieben des Gleitgelenks 6 wird die Wäschespinne 3 aufgespannt. Die Wäscheleine 2 weist eine mit Partikeln 10 versehene mikroraue und hydrophobe Oberflächenstruktur auf, die selbstreinigend und schmutzabweisend ist. Die Wäschespinne 3 ist ohne die Gefahr einer Verschmutzung der aufzuhängenden Wäsche jederzeit benutzbar.

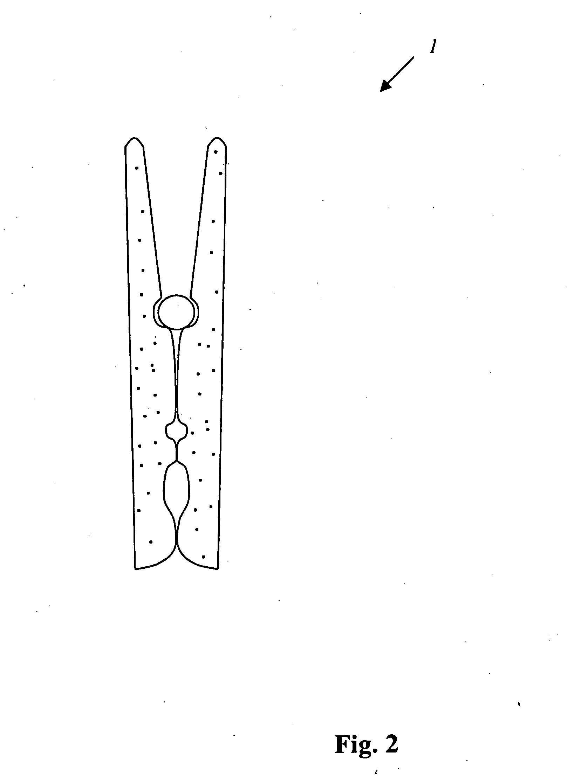

Figur 2 zeigt ein erfindungsgemäßes Wäscheaufhängemittel 1, dass als Wäscheklammer 9 ausgebildet ist. Die Wäscheklammer 9 ist mit einer hydrophoben und mikrorauen Beschichtung versehen, wodurch ein Selbstreinigungseffekt erzielt wird. Die Wäscheklammer kann - auch im Freien - stets an der Wäscheleine verbleiben, da keine Gefahr der Verschmutzung besteht. Hierdurch wird der Aufhänge- und Abhängevorgang enorm erleichtert, da das aufwendige Herauskramen von Wäscheklammern aus einem Klammerbeutel und das anschließende Wiederverstauen der Wäscheklammern im Klammerbeutel überflüssig ist.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Wäscheaufhängemittel
- 2: Wäscheleine
- 3: Wäschespinne
- 4: Arme
- 5: Mast
- 6: Gleitgelenk
- 7: Stützarme
- 8: Haltestern
- 9: Wäscheklammer
- 10: Partikel

## Patentansprüche

1. Wäscheaufhängemittel, **dadurch gekennzeichnet, dass** das Wäscheaufhängemittel selbstreinigend und/oder schmutzabweisend ausgebildet ist.

2. Wäscheaufhängemittel nach Anspruch 1, **dadurch gekennzeichnet, dass** das Wäscheaufhängemittel eine mikroraue Oberflächenstruktur und/oder eine hydrophobe Oberfläche aufweist und/oder das Wäscheaufhängemittel eine Oberfläche aufweist, die analog zum Lotuseffekt selbstreinigend ist.

3. Wäscheaufhängemittel nach einem der Ansprüche 1 oder 2, **dadurch gekennzeichnet, dass** die Oberfläche des Wäscheaufhängemittel mit hydrophoben Partikeln, insbesondere mit Nanopartikeln, versehen ist.

4. Wäscheaufhängemittel nach einem der Ansprüche 1 bis 3, **dadurch gekennzeichnet, dass** das Wäscheaufhängemittel eine - vorzugsweise hydrophobe und/oder mikroraue - Beschichtung aufweist.

5. Wäscheaufhängemittel nach einem der Ansprüche 1 bis 4, **dadurch gekennzeichnet, dass** das Wäscheaufhängemittel eine selbstreinigende Faser, insbesondere eine selbstreinigende Polymerfaser, aufweist.

6. Wäscheaufhängemittel nach Anspruch 5, **dadurch gekennzeichnet, dass** die Faser hydrophob und/oder mikrorau ist.

7. Wäscheaufhängemittel nach einem der Ansprüche 1 bis 6, **dadurch gekennzeichnet, dass** das Wäscheaufhängemittel eine Wäscheleine beinhaltet und/oder als Wäscheleine ausgebildet ist.

8. Wäscheaufhängemittel nach einem der Ansprüche 1 bis 7, **dadurch gekennzeichnet, dass** das Wäscheaufhängemittel einen Wäschestab beinhaltet und/oder als Wäschestab ausgebildet ist.

9. Wäscheaufhängemittel nach einem der Ansprüche 1 bis 8, **dadurch gekennzeichnet, dass** das Wäscheaufhängemittel eine Wäscheklammer beinhaltet und/oder als Wäscheklammer ausgebildet ist.

10. Wäscheaufhängemittel nach einem der Ansprüche 1 bis 9, **dadurch gekennzeichnet, dass** das Wäscheaufhängemittel ein Trockengitter beinhaltet und/oder als Trockengitter ausgebildet ist.

11. Wäscheaufhängemittel nach einem der Ansprüche 1 bis 10, **dadurch gekennzeichnet, das** das Wäscheaufhängemittel ein Wäschetrocknungsgestell, insbesondere einen Standtrockner oder eine Wäschespinne, beinhaltet und/oder als Wäschetrocknungsgestell ausgebildet ist.

## Claims

1. Laundry suspension means, **characterized in that** the laundry suspension means is designed to be self-cleaning and/or dirt-repellent.

2. Laundry suspension means according to Claim 1, **characterized in that** the laundry suspension means has a micro-rough surface structure and/or a hydrophobic surface and/or the laundry suspension means has a surface which is self-cleaning in a similar way to the Lotus effect.

3. Laundry suspension means according to either one of Claims 1 and 2, **characterized in that** the surface of the laundry suspension means is provided with hydrophobic particles, in particular with nanoparticles.

4. Laundry suspension means according to one of Claims 1 to 3, **characterized in that** the laundry suspension means has a preferably hydrophobic and/or micro-rough coating.

5. Laundry suspension means according to one of Claims 1 to 4, **characterized in that** the laundry suspension means has a self-cleaning fibre, in particular a self-cleaning polymer fibre.

6. Laundry suspension means according to Claim 5, **characterized in that** the fibre is hydrophobic and/or micro-rough.

7. Laundry suspension means according to one of Claims 1 to 6, **characterized in that** the laundry suspension means contains a washing line and/or is designed as a washing line.

8. Laundry suspension means according to one of Claims 1 to 7, **characterized in that** the laundry suspension means contains a laundry bar and/or is designed as a laundry bar.

9. Laundry suspension means according to one of Claims 1 to 8, **characterized in that** the laundry suspension means contains a clothes peg and/or is designed as a clothes peg.

10. Laundry suspension means according to one of Claims 1 to 9, **characterized in that** the laundry suspension means contains a drying trellis and/or is designed as a drying trellis.

11. Laundry suspension means according to one of Claims 1 to 10, **characterized in that** the laundry suspension means contains a laundry drying frame, in particular a standing dryer or a rotary laundry dryer, and/or is designed as a laundry drying frame.

## Revendications

1. Système pour pendre le linge, **caractérisé en ce que** le système pour pendre le linge est réalisé de manière autonettoyante et/ou résistant aux salissures.

2. Système pour pendre le linge selon la revendication 1, **caractérisé en ce que** le système pour pendre le linge présente une structure de surface micro-rugueuse et/ou une surface hydrophobe et/ou **en ce que** le système pour pendre le linge présente une surface qui est autonettoyante à la manière du lotus.

3. Système pour pendre le linge selon l'une quelconque des revendications 1 ou 2, **caractérisé en ce que** la surface du système pour pendre le linge est pourvue de particules hydrophobes, notamment de nanoparticules.

4. Système pour pendre le linge selon l'une quelconque des revendications 1 à 3, **caractérisé en ce que** le système pour pendre le linge présente un revêtement de préférence hydrophobe et/ou micro-rugueux.

5. Système pour pendre le linge selon l'une quelconque des revendications 1 à 4, **caractérisé en ce que** le système pour pendre le linge présente une fibre autonettoyante, notamment une fibre polymère autonettoyante.

6. Système pour pendre le linge selon la revendication 5, **caractérisé en ce que** la fibre est hydrophobe et/ou micro-rugueuse.

7. Système pour pendre le linge selon l'une quelconque des revendications 1 à 6, **caractérisé en ce que** le système pour pendre le linge contient une corde à linge et/ou est réalisé sous forme de corde à linge.

8. Système pour pendre le linge selon l'une quelconque des revendications 1 à 7, **caractérisé en ce que** le système pour pendre le linge contient une barre à linge et/ou est réalisé sous forme de barre à linge.

9. Système pour pendre le linge selon l'une quelconque des revendications 1 à 8, **caractérisé en ce que** le système pour pendre le linge contient une pince à linge et/ou est réalisé sous forme de pince à linge.

10. Système pour pendre le linge selon l'une quelconque des revendications 1 à 9, **caractérisé en ce que** le système pour pendre le linge contient une grille de séchage et/ou est réalisé sous forme de grille de séchage.

11. Système pour pendre le linge selon l'une quelconque des revendications 1 à 10, **caractérisé en ce que** le système pour pendre le linge contient un bâti de séchage du linge, en particulier un sécheur autoportant ou un séchoir parapluie et/ou est réalisé sous forme de bâti de séchage du linge.
